# EUROPÄISCHE PATENTSCHRIFT

(11) **EP 3 492 161 B1**
(45) Veröffentlichungstag und Bekanntmachung des Hinweises auf die Patenterteilung: **08.09.2021**
(21) Anmeldenummer: 18194827.4
(22) Anmeldetag: 17.09.2018
(51) Int. Cl.: B01D 46/24, B01D 46/00, B01D 46/44

(54) **VORRICHTUNG ZUM REINIGEN EINES PRODUKTGASES**
DEVICE FOR PURIFYING A PRODUCT GAS
DISPOSITIF DE NETTOYAGE D'UN PRODUIT GAZEUX

(30) Priorität: 29.11.2017 AT 509862017
(43) Veröffentlichungstag der Anmeldung: 05.06.2019
(73) Patentinhaber: Hargassner Ges mbH, 4952 Weng/Innkreis (AT)
(72) Erfinder: Buchberger, Reinhard, 4371 Dimbach (AT); Hargassner, Markus, 4952 Weng im Innkreis (AT)
(74) Vertreter: Hübscher & Partner Patentanwälte GmbH

(56) Entgegenhaltungen:
- WO-A1-2004/037389
- FR-A- 874 535

## Beschreibung

Die Erfindung bezieht sich auf eine Vorrichtung zum Reinigen eines Produktgases aus einem Holzvergaser mit einem einen Gaseinlass und einen Gasauslass aufweisenden Gehäuse und mit wenigstens einem zwischen einem an den Gaseinlass angeschlossenen Produktgasabschnitt und einem mit dem Gasauslass verbundenen Reingasabschnitt angeordneten Filterelement, das einen Stützkorb in Form eines hohlen Rotationskörpers aus geraden Erzeugenden und einen auf der Außenseite am Stützkorb anliegenden, von außen mit dem Produktgas beaufschlagbaren Filtermantel aus einem Faservlies umfasst, wobei im Produktgasabschnitt ein entlang einer Erzeugenden am Filtermantel anliegender Abstreifer vorgesehen ist und Abstreifer und Stützkorb um dessen Rotationsachse relativ zueinander drehbar sind.

Um im Vergleich zu üblichen Keramikfiltern einen längeren Dauerbetrieb bis zur notwendigen Filterreinigung zu ermöglichen, ist es bei Filtervorrichtungen für Pyrolysegase aus der Holzvergasung bekannt (GB 2514312 A), Filterelemente einzusetzen, die einen hohlen Stützkorb in Form eines Konus oder eines Zylinders aufweisen und auf der Außenseite mit einem Filtermantel aus einem Faservlies versehen sind. Beim Durchtritt des den Filtermantel von außen beaufschlagenden Produktgases durch das Filterelement werden die mitgeführten Feststoffteilchen durch den Filtermantel zurückgehalten und bilden einen Filterkuchen. Das Reingas kann durch den hohlen Stützkorb des Filterelements abgeführt werden.

Der sich auf dem Faservlies des Filtermantels aufbauende Filterkuchen ist zwar für die Reinigungsleistung des Filterelements maßgebend, doch begrenzt der mit dem Anwachsen des Filterkuchens zunehmende Strömungswiderstand den wartungsfreien Einsatz des Filterelements, sodass beim Erreichen eines Schwellwerts des sich mit dem anwachsenden Filterkuchen erhöhenden Druckverlusts das Filterelement zumindest von einem Teil des Filterkuchens befreit werden muss, beispielsweise durch ein impulsartiges Abblasen von der Innenseite des Stützkorbs her, was jedoch eine Unterbrechung der kontinuierlichen Produktgasströmung durch das Filterelement und damit des Einsatzes des Filterelements bedingt.

Aus der FR 874 535 A ist es darüber hinaus bekannt, zum Reinigen eines zylindrischen oder konischen Filterelements eine Reinigungsbürste einzusetzen, die um das Filterelement gedreht wird, und zwar mittels eines koaxial zum Filterelement im Filtergehäuse gelagerten, durch ein Handrad antreibbaren Dreharm. Um die Reinigungsbürste zusätzlich gegenüber dem Dreharm antreiben zu können, kann sie auf einer parallel zu einer Erzeugenden des Filterelements verlaufenden Welle in diesem Dreharm gelagert werden, die ein mit einem dem Filtergehäuse zugeordneten Zahnkranz kämmendes Zahnrad trägt, sodass mit der Drehung des Dreharms ein Drehantrieb der Reinigungsbürste verbunden ist, was jedoch nicht nur einen entsprechenden Konstruktionsaufwand, sondern auch einen nicht unerheblichen Platzbedarf mit sich bringt.

Der Erfindung liegt somit die Aufgabe zugrunde, eine Vorrichtung zum Reinigen des Produktgases aus einem Holzvergaser so auszugestalten, dass die notwendige Wartung des Filterelements ohne Unterbrechung der Reinigung des Produktgases mit vergleichsweise einfachen, wenig Platz beanspruchenden Mitteln vorgenommen werden kann.

Die Erfindung löst die gestellte Aufgabe durch die Merkmale des Anspruchs 1.

Durch das Vorsehen eines Abstreifers, der relativ zum Stützkorb des Filterelements um dessen Rotationsachse gedreht werden kann, kann ein Teil des Filterkuchens während der Produktgasreinigung vom Filtermantel abgestreift werden, und zwar in einem Ausmaß, das die durch den Filterkuchen verbesserte Reinigungswirkung nicht beeinträchtigt. Die Anstellung des geraden Abstreifers entlang einer Erzeugenden des einen Rotationskörper bildenden Stützkorbs stellt dabei einfache konstruktive Voraussetzungen für einen wirksamen Teilabtrag des Filterkuchens dar, weil durch diese Maßnahme ein gleichmäßiger Abtrag über die gesamte Länge der Erzeugenden sichergestellt werden kann, wenn für einen entsprechenden Anlagedruck des Abstreifers am Filterelement gesorgt wird. Diese Vorteile können insbesondere bei Stützkörben in Form eines Zylinders vorteilhaft genützt werden.

Da der Stützkorb um seine Rotationsachse gegenüber dem undrehbar gehaltenen Abstreifer drehbar ist, entfällt die Notwendigkeit, um das Filterelement Raum für die Bewegungsbahn des Abstreifers zu schaffen, was eine gedrängtere Bauweise erlaubt. Außerdem ist es konstruktiv einfacher, einen vorzugsweise einstellbaren Anlagedruck des Abstreifers am Filtermantel sicherzustellen. Mit dem Stützkorb, der in einem den Produktgasabschnitt des Gehäuses gasdicht abschließenden Einsatz drehbar gelagert ist, muss das drehbar im Einsatz gelagerte Filterelement lediglich mit dem Einsatz in das Gehäuse eingesetzt werden.

Der den Produktgasabschnitt des Gehäuses gasdicht abschließende Einsatz trennt somit diesen Produktgasabschnitt vom Reingasabschnitt des Gehäuses, der durch einen abnehmbaren Deckel geschlossen werden kann. Ein solcher Gehäusedeckel kann in vorteilhafter Weise den Antrieb für den Stützkorb tragen, sodass mit dem Aufsetzen des Gehäusedeckels auf das Gehäuse auch für eine Antriebsverbindung zwischen Antrieb und Stützkorb gesorgt ist, wenn zwischen dem Antrieb und dem Stützkorb eine Steckkupplung zur Drehmitnahme des im Einsatz drehbar gelagerten Stützkorbs vorgesehen wird.

Das Abtragen des Filterkuchens lässt sich in einfacher Art automatisieren, wenn der Antrieb für den Stützkorb in Abhängigkeit vom Druckabfall am Filterelement betätigt wird, weil dann der Druckabfall am Filterelement in einem zulässigen Bereich gehalten werden kann, der einerseits eine ausreichende Reinigungsleistung sicherstellt und anderseits den Energieeinsatz für die Produktgasförderung begrenzt.

In der Zeichnung ist der Erfindungsgegenstand beispielsweise dargestellt. Es zeigen
- Fig. 1: eine erfindungsgemäße Vorrichtung zum Reinigen eines Produktgases aus einem Holzvergaser in einem vereinfachten Längsschnitt,
- Fig. 2: diese Vorrichtung in einem Schnitt nach der Linie II-II der Fig. 1 in einem größeren Maßstab und

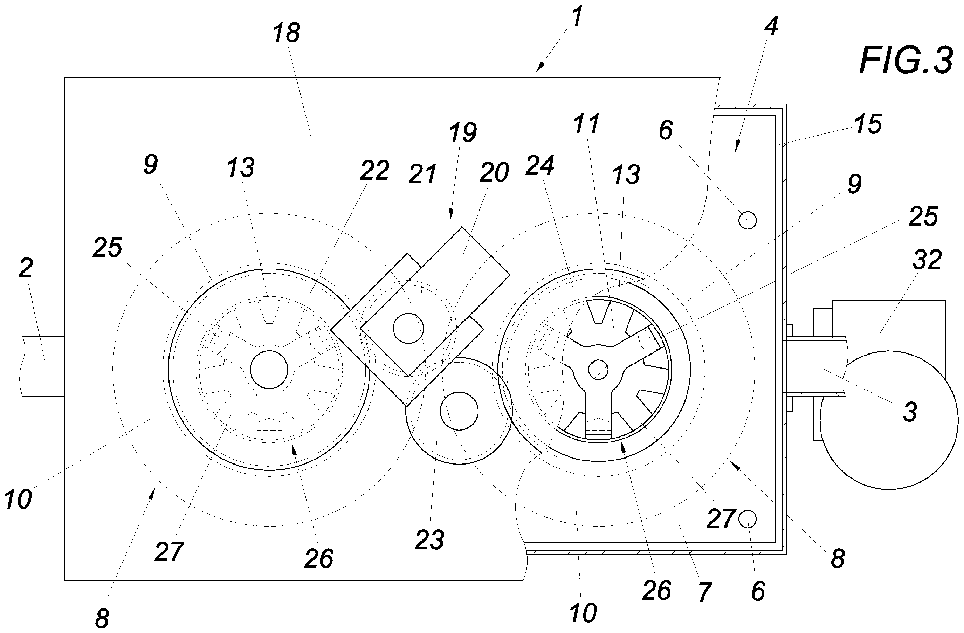

- Fig. 3: eine zum Teil aufgerissene Draufsicht auf die Vorrichtung ebenfalls in einem größeren Maßstab.

Die dargestellte Vorrichtung weist ein Gehäuse 1 mit einem Gaseinlass 2 für das zu reinigende Produktgas und mit einem Gasauslass 3 für das Reingas auf. Das Gehäuse 1 nimmt einen Einsatz 4 auf, der ein Gestell aus einer Bodenplatte 5 und einer mit der Bodenplatte 5 durch Zuganker 6 verbundenen Deckplatte 7 besitzt. In diesem Gestell sind zwei Filterelemente 8 drehbar gelagert. Die in übereinstimmender Weise ausgebildeten Filterelemente 8 umfassen einen zylindrischen Stützkorb 9, beispielsweise aus einem Lochblech, und einen auf der Außenseite des Stützkorbs 9 vorgesehenen Filtermantel 10 aus einem Faservlies, vorzugsweise einem Mineralwollevlies. Die Stützkörbe 9 sind unten mit einem gasdichten Boden 11 versehen, der über ein Drehlager 12 gegenüber der Bodenplatte 5 geführt wird. Die Stützkörbe 9 sind auf der gegenüberliegenden Oberseite mit einem zentralen Führungskragen 13 in der Deckplatte 7 drehbar gelagert.

Die Deckplatte 7 des Einsatzes 4 ist mit einem parallel zum Mantel des Gehäuses 1 verlaufenden Randsteg 14 versehen, der über eine umlaufende Dichtung 15 oberhalb des Gaseinlasses 2 am Gehäuse 1 lastabtragend abgestützt ist. Da der Führungskragen 13 der Stützkörbe 9 die Deckplatte 7 gasdicht durchsetzt, schließt der Einsatz 4 einen an den Gaseinlass 2 angeschlossenen Produktgasabschnitt 16 des Gehäuses 1 von einem sich oberhalb des Einsatzes 4 ergebenden Rohgasabschnitt 17 ab, der sich zwischen dem Einsatz 4 und einem Gehäusedeckel 18 ergibt und mit dem Gasauslass 3 verbunden ist.

Der Gehäusedeckel 18 trägt einen Antrieb 19 für die beiden Filterelemente 8. Dieser Antrieb 19 umfasst einen Elektromotor 20, der über ein Zahnrad 21 das Antriebszahnrad 22 für das eine Filterelement 8 und über ein Zwischenrad 23 das Antriebszahnrad 24 für das andere Filterelement 8 antreibt. Die Wellen der Antriebszahnräder 22 und 24 tragen Mitnehmerfinger 25 als treibender Teil einer Steckkupplung 26, deren getriebener Teil durch einen Kranz von den Stützkörben 9 zugehörigen Steckaufnahmen 27 für die die Mitnehmerfinger 25 gebildet wird. Aufgrund von Anlaufschrägen greifen die Mitnehmerfinger 25 beim Schließen des Gehäusedeckels 18 unter einer allfälligen Drehung der Stützkörbe 9 selbständig in deren Steckaufnahmen 27 ein, sodass bei einer Betätigung des Elektromotors 20 nach dem Schließen des Gehäusedeckels 18 für eine Drehung der Stützkörbe 9 gesorgt ist.

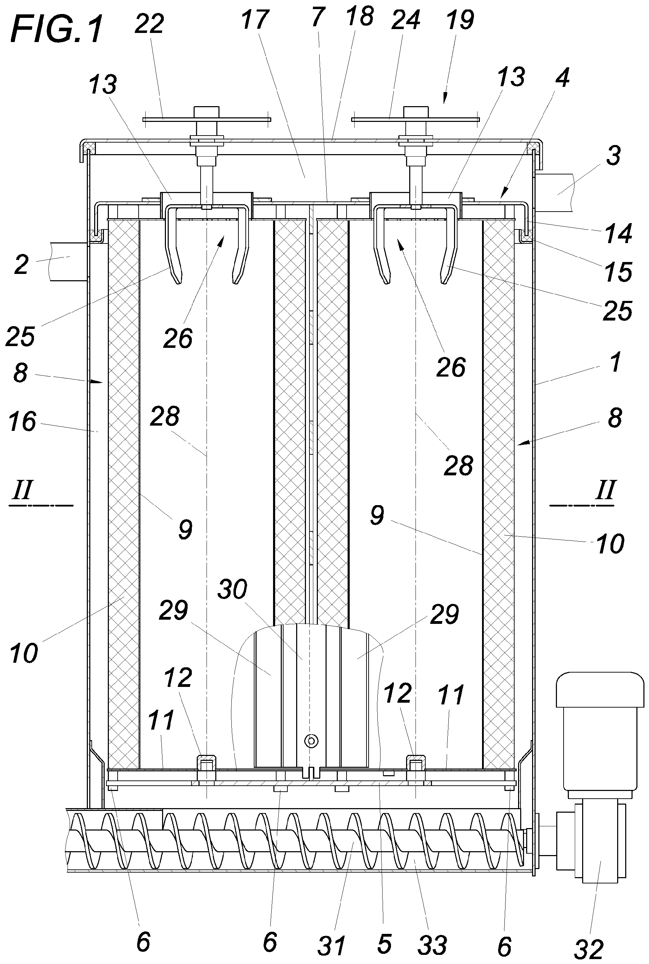

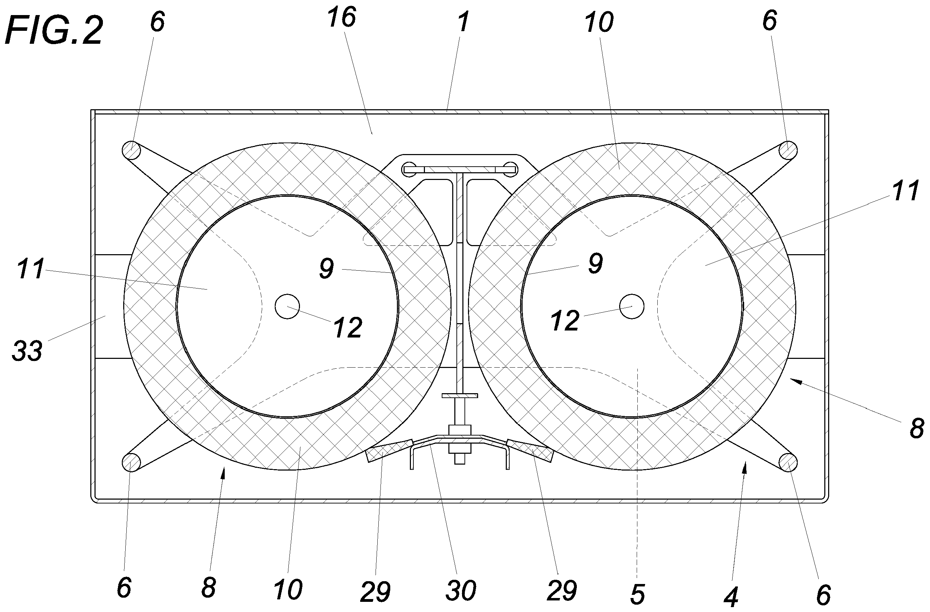

Die Drehung der Filterelemente 8 ist zum teilweisen mechanischen Abtrag des sich auf dem Filtermantel 10 aufbauenden Filterkuchens mithilfe von im Einsatz 4 gehaltenen, zur Rotationsachse 28 der Filterelemente 8 parallelen Abstreifern 29 erforderlich. Die durch eine Befestigungsleiste 30 am Einsatz 4 befestigten und hinsichtlich der Anstellung an die Filtermäntel 10 einstellbaren Abstreifer 29 streifen bei einer Drehung der Filterelemente 8 einen Teil des am Filtermantel 10 aufgebauten Filterkuchens ab. Die von den Filtermänteln 10 abgetragenen Teile des Filterkuchens können gemäß der Fig. 1 mithilfe einer Schnecke 31 aus dem Gehäuse 1 ausgetragen werden. Der Schneckenantrieb ist mit 32 bezeichnet. In der Fig. 2 ist aus Übersichtlichkeitsgründen lediglich der Schneckenkanal 33 im Gehäuseboden angedeutet.

Das üblicherweise durch einen vorgeschalteten Wärmetauscher über den Gaseinlass 2 in den Produktgasabschnitt 16 strömende Produktgas aus einem Holzvergaser durchströmt den Filtermantel 10 der beiden Filterelemente 8 unter Abscheidung der Feststoffanteile als Reingas, das durch die Führungskrägen 13 in den Reingasabschnitt 17 zwischen dem Einsatz 4 und dem Gehäusedeckel 18 gelangt und durch den Gasauslass 3 aus dem Gehäuse 1 austritt.

Der Druckabfall am Filtermantel 10 kann vorteilhaft zur Steuerung des Antriebs 19 für die Filterelemente 8 überwacht werden. Steigt dieser Druckabfall über einen vorgegebenen Schwellwert an, so wird der Elektromotor 20 eingeschaltet, sodass die Abstreifer 29 einen Teil des sich am Filtermantel angesammelten Filterkuchens abtragen, bis der Druckabfall an den Filtermänteln 10 unter einen unteren Schwellwert fällt. Da diese Filterreinigung die Filterfunktion nicht beeinträchtigt, kann die Filtervorrichtung trotz der notwendigen Filterreinigung in einem Dauerbetrieb betrieben werden.

## Patentansprüche

1. Vorrichtung zum Reinigen eines Produktgases aus einem Holzvergaser mit einem einen Gaseinlass (2) und einen Gasauslass (3) aufweisenden Gehäuse (1) und mit wenigstens einem zwischen einem an den Gaseinlass (2) angeschlossenen Produktgasabschnitt (16) und einem mit dem Gasauslass (3) verbundenen Reingasabschnitt (17) angeordneten Filterelement (8), das einen Stützkorb (9) in Form eines hohlen Rotationskörpers aus geraden Erzeugenden und einen auf der Außenseite am Stützkorb (9) anliegenden, von außen mit dem Produktgas beaufschlagbaren Filtermantel (10) aus einem Faservlies umfasst, wobei im Produktgasabschnitt (16) ein entlang einer Erzeugenden am Filtermantel (10) anliegender Abstreifer (29) vorgesehen ist und Abstreifer (29) und Stützkorb (9) um dessen Rotationsachse (28) relativ zueinander drehbar sind, **dadurch gekennzeichnet, dass** der gegenüber dem undrehbar gehaltenen Abstreifer (29) drehbare Stützkorb (9) in einem den Produktgasabschnitt (16) des Gehäuses (1) gasdicht abschließenden Einsatz (4) drehbar gelagert ist.

2. Vorrichtung nach Anspruch 1, **dadurch gekennzeichnet, dass** der Reingasabschnitt (17) des Gehäuses (1) durch einen abnehmbaren Gehäusedeckel (18) nach oben geschlossen ist, der den Antrieb (19) für den Stützkorb (9) trägt, und dass zwischen dem Antrieb (19) und dem Stützkorb (9) eine Steckkupplung (26) vorgesehen ist.

3. Vorrichtung nach Anspruch 1 oder 2, **dadurch gekennzeichnet, dass** der Antrieb für den Stützkorb (9) in Abhängigkeit vom Druckabfall am Filterelement (8) betätigbar ist.

## Claims

1. Apparatus for cleaning a product gas from a wood gasifier comprising a housing (1), which has a gas inlet (2) and a gas outlet (3), and comprising at least one filter element (8) which is arranged between a product gas portion (16) connected to the gas inlet (2) and a clean gas portion (17) connected to the gas outlet (3) and which comprises a supporting cage (9) in the form of a hollow rotational body consisting of straight generatrices and a filter shell (10) which lies on the outer side against the supporting cage (9), can have product gas applied externally thereto and consists of a fibre mat, wherein in the product gas portion (16) a stripper (29) is provided which lies along a generatrix against the filter shell (10) and the stripper (29) and supporting cage (9) are rotatable relative to one another about the rotational axis (28) thereof, **characterised in that** the supporting cage (9) which is rotatable with respect to the non-rotatably held stripper (29) is rotatably mounted in an insert (4) which closes off the product gas portion (16) of the housing (1) in a gas-tight manner.

2. Apparatus as claimed in claim 1, **characterised in that** the clean gas portion (17) of the housing (1) is closed at the top by means of a removable housing cover (18) which supports the drive (19) for the supporting cage (9) and **in that** a plug-in coupling (26) is provided between the drive (19) and the supporting cage (9).

3. Apparatus as claimed in claim 1 or 2, **characterised in that** the drive for the supporting cage (9) can be actuated in dependence upon the pressure drop at the filter element (8).

## Revendications

1. Dispositif pour nettoyer un produit gazeux provenant d'un carburateur à bois avec un carter (1) présentant une entrée de gaz (2) et une sortie de gaz (3) et avec au moins élément de filtrage (8) disposé entre une section de produit gazeux (16) raccordée à l'entrée de gaz (2) et une section de gaz propre (17) reliée à la sortie de gaz (3), qui comprend un panier de support (9) en forme de corps rotatif creux fait de génératrices droites et une enveloppe filtrante (10) faite d'une nappe de fibres appliquée sur la face extérieure du panier de support (9) qui peut être soumise de l'extérieur au produit gazeux, dans la section de produit gazeux (16) étant prévu un racloir (29) appliqué le long d'une génératrice sur l'enveloppe filtrante (10) et le racloir (29) et le panier de support (9) pouvant pivoter l'un par rapport à l'autre autour de son axe de rotation (28), **caractérisé en ce que** le panier de support (9) pouvant pivoter par rapport au racloir (29) maintenu immobile est monté de façon pivotante dans un insert (4) obturant de façon étanche aux gaz la section de produit gazeux (16) du carter (1).

2. Dispositif selon la revendication 1, **caractérisé en ce que** la section de gaz propre (17) du carter (1) est close vers le haut par un couvercle de carter (18) amovible qui supporte le dispositif d'entraînement (19) destiné au panier de support (9) et qu'entre le dispositif d'entraînement (19) et le panier de support (9) est prévue une fiche de connexion (26).

3. Dispositif selon la revendication 1 ou 2, **caractérisé en ce que** le dispositif d'entraînement destiné au panier de support (9) peut être actionné en fonction de la chute de pression au niveau de l'élément de filtrage (8).
